# EUROPEAN PATENT APPLICATION

(11) **EP 4 841 476 A1**
(43) Date of publication of application: **18.11.2026**
(21) Application number: 25770925.3
(22) Date of filing: 16.05.2025
(51) Int. Cl.: G06F 16/9535

(54) **INTELLIGENT RECOMMENDATION METHOD AND APPARATUS, DEVICE, AND STORAGE MEDIUM**

(30) Priority: 27.03.2025 CN 202510372973
(71) Applicant: Launch Tech Co., Ltd, Longgang District Shenzhen Guangdong 518000 (CN)
(72) Inventor: HONG, Zhaofeng, Shenzhen, Guangdong 518000 (CN)
(74) Representative: Taor, Simon Edward William
(86) International application number: PCT/CN2025/095450
(87) International publication number: WO 2026/199689

(57) **Abstract**

Disclosed are an intelligent recommendation method and apparatus, a device, and a storage medium. The method includes the following. Historical user data and product data corresponding to *a* diagnosis products are obtained. A historical user portrait is constructed according to *b* preset usage scenarios and the historical user data. A recommendation rule is determined according to *c* preset user demands, the product data, and the historical user portrait. The *a* diagnosis products are classified according to the product data, the historical user portrait, and the recommendation rule, to obtain *a* classification label sets. Interaction content between a user and a preset large language model is obtained. User preference information is determined according to the interaction content. A target classification label set is determined from the *a* classification label sets according to the user preference information. Related recommended content of a target diagnosis product corresponding to the target classification label set is output to the user through the preset large language model. By means of the disclosure, the accuracy of product recommendation can be improved.

## Description

### TECHNICAL FIELD

This disclosure relates to the technical field of product promotion, and in particular, to an intelligent recommendation method and apparatus, a device, and a storage medium.

### BACKGROUND

With the ever increasing types of products produced by enterprises and sales objects of the products, users have increasingly greater demand for understanding new and existing products, while their needs for initial purchases and replacement purchases are also increasing significantly.

At present, a user mainly learns a product to be purchased by browsing official web pages, visiting a physical store, and consulting during after-sales follow-ups, or an enterprise may recommend a product satisfying user demands to the user through a recommendation algorithm of each e-commerce platform.

However, the current recommendation algorithm only considers historical browsing records and purchase records of the user, and is unable to accurately meet all demands of the user, resulting in low accuracy of product recommendation.

### SUMMARY

In order to solve the described problem existing in the related art, embodiments of the present disclosure provide an intelligent recommendation method and apparatus, a device, and a storage medium. A historical user portrait can be constructed according to a preset usage scenario and historical user data, and by integrating a preset user demand, the historical user portrait, and the product data, a recommendation rule is determined. Diagnosis products are classed by integrating product data, the historical user portrait, and the recommendation rule, and a classification label set corresponding to the diagnosis products are obtained. User preference information can be determined according to interaction content between a user and a preset large language mode, and a target classification label set corresponding to the user preference information is determined. The related recommended content of the target diagnosis product corresponding to the target classification label set is output to the user through the large language model. In this way, a diagnosis product is recommended to the user by comprehensively considering a usage scenario, a historical user portrait, product data, and user preference information, so that the accuracy of product recommendation can be improved.

In a first aspect, an intelligent recommendation method is provided in embodiments of the present disclosure. The method includes the following. Historical user data and product data corresponding to *a* diagnosis products are obtained, a being a positive integer. A historical user portrait is constructed according to *b* preset usage scenarios and the historical user data, *b* being a positive integer. A recommendation rule is determined according to *c* preset user demands, the product data, and the historical user portrait; *c* being a positive integer. The *a* diagnosis products are classified according to the product data, the historical user portrait, and the recommendation rule, to obtain *a* classification label sets; each diagnosis product corresponding to one classification label set, and each classification label set including at least one classification label. Interaction content between a user and a preset large language model is obtained. User preference information is determined according to the interaction content. A target classification label set is determined from the *a* classification label sets according to the user preference information. Related recommended content of a target diagnosis product corresponding to the target classification label set is output to the user through the preset large language model.

In a second aspect, an intelligent recommendation apparatus is provided in embodiments of the present disclosure. The intelligent recommendation apparatus includes an obtaining unit and a processing unit. The obtaining unit is configured to obtain historical user data and product data corresponding to *a* diagnosis products, a being a positive integer. The processing unit is configured to construct a historical user portrait according to *b* preset usage scenarios and the historical user data, *b* being a positive integer; determine a recommendation rule according to *c* preset user demands, the product data, and the historical user portrait; *c* being a positive integer; and classify the *a* diagnosis products according to the product data, the historical user portrait, and the recommendation rule, to obtain *a* classification label sets; each diagnosis product corresponding to one classification label set, and each classification label set including at least one classification label. The obtaining unit is configured to obtain interaction content between a user and a preset large language model. The processing unit is configured to determine user preference information according to the interaction content; determine, according to the user preference information, a target classification label set from the *a* classification label sets; and output, through the preset large language model, related recommended content of a target diagnosis product corresponding to the target classification label set to the user.

In a third aspect, an electronic device is provided in embodiments of the present disclosure. The electronic device includes a processor and a memory, the processor is connected to the memory, the memory is configured to store computer programs, and the processor is configured to be executed computer programs stored in the memory to cause the electronic device to execute the method in the first aspect.

In a fourth aspect, a computer-readable storage medium is provided in embodiments of the present disclosure. The computer-readable storage medium stores a computer program, and the computer program is configured to be executed by a processor to execute the method in the first aspect.

In a fifth aspect, a computer program product is provided in embodiments of the present disclosure. The computer program product includes a non-transitory computer-reader storage medium storing a computer program. The computer program is operable to enable a computer to execute part of or all of operations described in the first aspect.

Implementation of embodiments of the present disclosure brings the following beneficial effects.

In embodiments of the present disclosure, historical user data and product data corresponding to *a* diagnosis products are firstly obtained. A historical user portrait is constructed according to *b* preset usage scenarios and the historical user data. A recommendation rule is determined according to *c* preset user demands, the product data, and the historical user portrait. Further, the *a* diagnosis products are classified according to the product data, the historical user portrait, and the recommendation rule, to obtain a classification label set corresponding to each diagnosis product in the *a* diagnosis products. Interaction content between a user and a preset large language model is obtained. User preference information is determined according to the interaction content. A target classification label set is determined from *a* classification label sets according to the user preference information. Related recommended content of a target diagnosis product corresponding to the target classification label set is output to the user through the preset large language model. In this way, the usage scenario and the user data can be taken into consideration, and a diagnosis product satisfying a specific usage scenario is recommended to the user. Furthermore, the product data, the user portrait, and the user demand can be intergraded to determine a recommendation rule meeting different demands of a user. The diagnosis products can also be classified by integrating the product data, the historical user portrait, and the recommendation rule, and a classification label satisfying the user preference information is selected from classification labels according to the interaction content between the user and the large model, so that relevant recommended content corresponding to the target diagnosis product is output and recommended to the user. In this way, all factors satisfying user demands are considered comprehensively, and product content is accurately recommended to a user, thereby improving the accuracy of product recommendation.

### BRIEF DESCRIPTION OF THE DRAWINGS

To describe technical solutions in embodiments of the present disclosure more clearly, the following briefly introduces accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a schematic diagram of an application scenario of an intelligent recommendation method according to an embodiment of the present disclosure.
FIG. 2 is a schematic flowchart of an intelligent recommendation method according to an embodiment of the present disclosure.
FIG. 3 is a schematic diagram of a mapping relationship corresponding to a recommendation rule according to an embodiment of the present disclosure.
FIG. 4 is a schematic flowchart of a method for determining a classification label set according to an embodiment of the present disclosure.
FIG. 5 is a schematic diagram of a classification label set according to an embodiment of the present disclosure.
FIG 6 is a schematic flowchart of a method for determining a target classification label set according to an embodiment of the present disclosure.
FIG. 7 is a block diagram of functional units of an intelligent recommending apparatus according to an embodiment of the present disclosure.
FIG 8 is a schematic structural diagram of an electronic device according to an embodiment of the present disclosure.

### DETAILED DESCRIPTION

In order to enable those skilled in the art to better understand solutions of the present disclosure, technical solutions in embodiments of the present disclosure will be described clearly and completely hereinafter with reference to the accompanying drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

The terms "first", "second", "third", "fourth", and the like used in the specification, the claims, and the accompany drawings of the present disclosure are used to distinguish different objects rather than describe a particular order. The terms "include", "include", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "embodiment" or "implementation" referred to herein means that a particular feature, structure, or feature described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

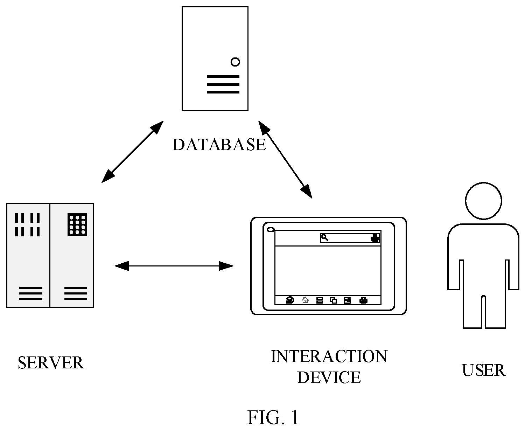

Reference is made to FIG. 1, which is a schematic diagram of an application scenario of an intelligent recommendation method according to an embodiment of the present disclosure. The scenario as illustrated in FIG. 1 includes an intelligent recommendation system. The intelligent recommendation system includes a server, an interaction device, and a database.

The server is mainly used for processing data requests, data caching, and program running, and includes an application program server, such as a Java application server and a NET application server. The server may further include a web server for publishing and managing a website, receiving an HTTP request of a client browser, and returning corresponding web page content. The server may further include a cloud server for cloud computing and big data processing. The server may further include a virtual private server (VPS) for creating multiple virtual private servers isolated from each other on a physical server by using virtual server software. The type of the server is not specifically limited in the present disclosure. Optionally, the server may further include a communication gateway for routing path calculation and routing message forwarding, for example, a vehicle communication interface (VCI) in the automotive electronics field.

The interaction device mainly includes an electronic device which can be used for data communication and is operable to implement user interaction. The interaction device includes a touch-control intelligent communication device, such as a tablet computer, a smart phone, etc. The interaction device may also include a computing device that interacts with the user through an external device, such as a computer, a smart appliance, and so on. The interaction device may also include a smart wearable device that is operable, e. g., a smart watch, virtual reality (VR) glasses, etc. The type of the interaction device is not specifically limited in the present disclosure. Optionally, the interaction device may include a vehicle diagnosis device of an automobile. It may be noted that a product intelligent recommendation program is installed on an interaction device, and a user can enter the product intelligent recommendation program by operating the interaction device, and interact with a preset large language model carried in the product intelligent recommendation program on the product intelligent recommendation program. During the interaction, the interaction device may send an interaction request to the server, and the server may return the interaction content to the interaction device by executing a product intelligent recommendation program to invoke a preset large language model.

The database may include a server for data storage and management, for example, a file server, a database server, a cloud server, and the like. The database may also include a memory for data reading and writing functions, including a memory, a disk, etc. The type of database is not specifically limited in the present disclosure. In embodiments of the present disclosure, the database is mainly used for storing data such as product data corresponding to diagnosis products and historical user data. The diagnosis products mainly include related products for detecting a technical condition of a vehicle, finding a cause of a failure, and evaluating performance of the vehicle, such as a vehicle diagnostic device, a VCI, a test desk, and the like. The database may read the historical user data and product data from a memory of the server or the interaction device, and when the server or the interaction device sends an acquisition request to the database, the historical user data and product data are sent to the server or the interaction device.

In some conventional product recommendation methods, historical browsing records and purchase records of a user for diagnosis products on the interaction device may be stored in the database, and the server may obtain the historical browsing records and the purchase records from the server, and recommend a related product to the user according to the historical browsing records and the purchase records. However, actual needs of the user for purchasing a diagnosis product each time may be different, and only considering historical browsing records and purchase records cannot accurately meet all the needs of the user, resulting in low accuracy of product recommendation.

To this end, a server applied to the described intelligent recommendation system may perform the following in the intelligent recommendation method provided in the present disclosure. The server obtains historical user data and product data corresponding to *a* diagnosis products, a being a positive integer. The server constructs a historical user portrait according to *b* preset usage scenarios and the historical user data, *b* being a positive integer. The server determines a recommendation rule according to *c* preset user demands, the product data, and the historical user portrait; *c* being a positive integer. The server classifies the *a* diagnosis products according to the product data, the historical user portrait, and the recommendation rule, to obtain *a* classification label sets; each diagnosis product corresponding to one classification label set, and each classification label set including at least one classification label. The server obtains interaction content between a user and a preset large language model. The server determines user preference information according to the interaction content. The server determines, according to the user preference information, a target classification label set from the *a* classification label sets. The server outputs, through the preset large language model, related recommended content of a target diagnosis product corresponding to the target classification label set to the user.

It can be seen that, when applied to the above scenario, the server can obtain the historical user data and the product data corresponding to the diagnosis product from the database. Then, the historical user portrait is constructed according to a preset usage scenario and the historical user data, and a recommendation rule is determined according to the preset user demand, the product data, and the historical user portrait. Then, the diagnosis products are classified according to the product data, the historical user portrait, and the recommendation rule to obtain classification label sets of products. Further, the server can determine the user preference information according to the interaction content between the user and the preset large language model, to select a target classification label set matching the user preference information from the classification label sets, and further output the related recommended content of the target diagnosis product corresponding to the target classification label set to the user through the preset large language model. In this way, by comprehensively considering the usage scenario, the historical user portrait, the product data, and the user preference information, a diagnosis product is recommended to a user, so that not only historical preferences of the user are taken into consideration, but also actual demands of the user are taken into consideration, thereby improving the accuracy of product recommendation.

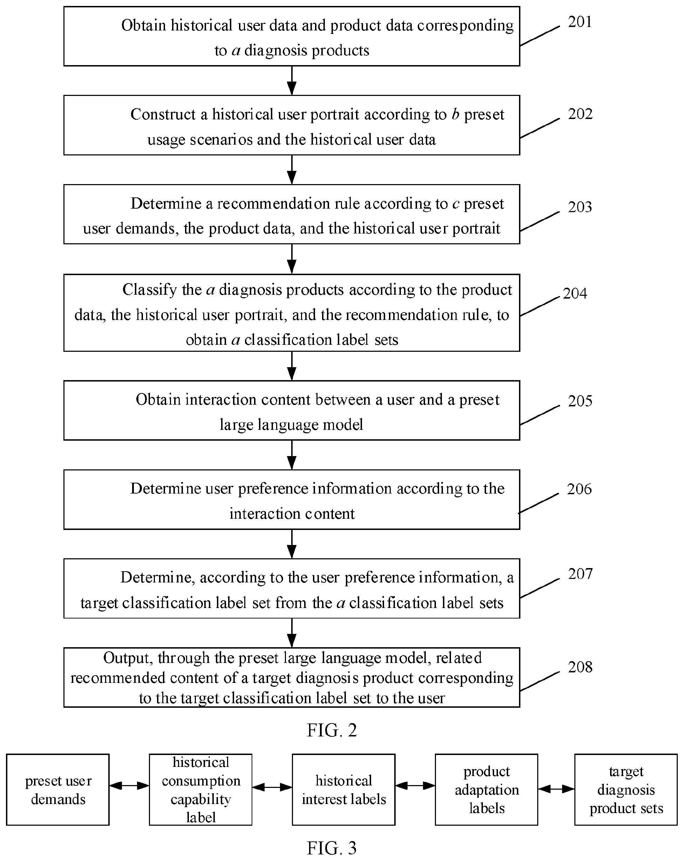

A method provided in embodiments of the present disclosure is described in the following. Reference is made to FIG. 2, which is a schematic flowchart of an intelligent recommendation method according to an embodiment of the present disclosure. The method is applied to a server in the described scenario, and the method includes but is not limited to the following operations.

At 201, historical user data and product data corresponding to *a* diagnosis products are obtained.

In embodiments of the present disclosure, *a* is a positive integer. The historical user data may include basic information registered by the user when the user uses the product intelligent recommendation program of the interaction device, historical behavior information and historical interaction content when the user uses the product intelligent recommendation program. The product data may include information such as product functions and product characteristics corresponding to the *a* diagnosis products.

It may be noted that, the historical user data and the product data corresponding to the *a* diagnosis products may be uploaded in advance by a manager and stored in the database or the memory of the interaction device, and when the historical user data and the product data are updated, new data uploaded by the manager may be synchronously updated to the database or the memory of the interaction device. The server may directly obtain the historical user data and the product data corresponding to the *a* diagnosis products from the database or the memory of the interaction device.

At 202, a historical user portrait is constructed according to *b* preset usage scenarios and the historical user data.

In embodiments of the present disclosure, *b* is a positive integer. The preset usage scenario may be a specific scenario in which a user uses a diagnosis product, for example, the user checking a running state of a vehicle, a brake pedal of the vehicle being repaired in a small-scale repair shop, and an engine being repaired in a large-scale repair institution.

It can be understood that, in different usage scenarios, a user has different demands for a diagnosis product, and based on the historical user data, a diagnosis product that the user is interested in can be analyzed. By integrating the usage scenarios with the historical user data, product adaptation situations of diagnosis products of interest to the user in each usage scenario can be analyzed.

In some possible embodiments, the historical user portrait is constructed according to the *b* preset usage scenarios and the historical user information as follows. A basic information label of the user is determined according to the basic information. Historical consumption information of the user for the *a* diagnosis products is determined according to the historical behavior information. A historical consumption capability label of the user is determined according to the basic information and the historical consumption information. Historical attention degrees of the user to the *a* diagnosis products are determined according to the historical behavior information. Historical demands of the user are determined by performing semantic recognition on the historical interaction content. Historical interest labels of the user are determined according to the historical consumption information, the historical attention degrees, and the historical demand. Product adaptation labels of the user under the *b* preset usage scenarios are determined according to the basic information label, the historical consumption capability label, and the historical interest label. The historical user portrait is determined according to the basic information label, the historical consumption capability label, the historical interest label, and the product adaptation label.

The historical user data may include basic information, historical behavior information, and historical interaction content. The basic information includes personal information registered when the user uses the product intelligent recommendation program, for example, information such as age, gender and occupation. The historical behavior information may include historical browsing records and historical consumption information when the user uses the product intelligent recommendation program, and also include historical interaction records for diagnosis products, such as likes and comments. The historical interaction content includes all interaction content between the user and the preset large language model. The server can construct the historical user portrait according to the *b* preset usage scenarios and the historical user data, where the historical user portrait is used for labelling basic information about the user, a historical consumption capability, a historical interest in a diagnosis product, and product suitability.

Specifically, the server first labels a basic information label of the user according to basic information registered by the user, where the basic information label may label information such as an age, a gender, and an occupation of the user. It may be noted that users of different ages, genders and occupations may have different interests in different diagnosis products, and therefore basic information about a user can be used as an index for determining a diagnosis product that the user is interested in, to accurately recommend the diagnosis product to the user.

Then, the server may obtain, from the historical behavior information, the historical consumption information for the *a* diagnosis products when the user uses the product intelligent recommendation program The historical consumption information includes a purchase record of the user for a diagnosis product. It can be understood that the historical consumption information of the user can reflect a consumption capability of the user and a budget range for purchasing a diagnosis product. On this basis, a diagnosis product conforming to the consumption capability of the user can be recommended to the user, thereby realizing accurate recommendation of the diagnosis product.

Then, the server may label the historical consumption capability of the user according to the basic information and the historical consumption information of the user to obtain a historical consumption capability label. In specific implementation, the server can respectively determine consumption capability scores corresponding to the basic information about a user, in which consumption capability scores corresponding to information of different ages, genders and occupations are different, and a mapping relationship between basic information and consumption capability scores can be set in advance. According to consumption ranges corresponding to historical consumption information about the user for the *a* diagnosis products, a consumption capability score corresponding to the historical consumption information about the user is determined, where a mapping relationship between consumption ranges and consumption capability scores can be set in advance. According to the consumption capability score corresponding to the basic information and the consumption capability score corresponding to the historical consumption information, the historical consumption capability of the user can be labeled, to obtain a historical consumption capability label. For example, the historical consumption capability label may include a historical budget range and a consumption capability score of the user.

Then, the server may determine historical attention degrees of the user to the *a* diagnosis products according to the historical behavior information. In specific implementation, the server may obtain historical interaction records of the user for a diagnosis product, for example, likes, comments, bookmarks, etc.; a corresponding historical attention degree is set for each historical interaction record; and a corresponding historical attention degree is also set for specific content of the comment. For example, a historical attention degree corresponding to a good review is different from a historical attention degree corresponding to a poor review. Based on this, the server can determine historical attention degrees of the user to the *a* diagnosis products according to historical interaction records of the user to the *a* diagnosis products.

Further, the server may perform semantic recognition on the historical interaction content, to determine historical demands of the user. Optionally, the semantic recognition may be performed on the historical interaction content through a preset large language model, to determine semantic information corresponding to the historical interaction content, and historical demands of the user are determined according to the semantic information. For example, the preset large language model may be any one of the following: a generated pre-trained transformer (GPT), a bidirectional encoder representation from transformers (BERT), and the like.

Further, the server may determine historical interest labels of the user for the *a* diagnosis products according to historical consumption information of the user for the *a* diagnosis products, historical attention degrees of the user for the *a* diagnosis products, and the historical demands of the user, and the historical interest labels are used for labelling interest values of the user for each of the *a* diagnosis products. For example, the server may determine, according to the number of purchases of each diagnosis product by the user, an interest value corresponding to historical consumption information, and determine, according to the historical attention degree of the user to each diagnosis product, an interest value corresponding to the historical attention degree, and determine, according to a historical demand of the user for each diagnosis product, an interest value corresponding to the historical demand. The sum of an interest value corresponding to historical consumption information, an interest value corresponding to a historical attention degree, and an interest value corresponding to a historical demand are taken as an interest value of the user for each diagnosis product, so that a historical interest label of a user is labeled.

Further, the server may determine the product adaptation label of the user under the *b* preset usage scenarios according to the basic information label, the historical consumption capability label, and the historical interest labels. In specific implementation, a diagnosis product that the user is interested in can be determined according to a historical interest label; diagnosis products matching the historical consumption capabilities of the user are selected from the diagnosis products that the user is interested in according to the historical consumption capability label; and then, a diagnosis product matching the historical consumption capability of the user is determined, according to basic information about the user, from the diagnosis products matching the historical consumption capability of the user. Finally, according to the adaptation degrees of the diagnosis product to the *b* preset usage scenarios, the adaptation degrees between the user and the diagnosis product are marked, and product adaptation labels in the *b* preset usage scenarios are obtained. The adaptation degrees of the diagnosis products to the *b* preset usage scenarios can be preset.

Finally, the basic information label, the historical consumption capability label, the historical interest labels, and the product adaptation labels are taken as user labels to obtain the historical user portrait.

It can be seen that the historical consumption information about the user for diagnosis products can be obtained by analyzing the historical behavior information about the user, the historical consumption capability label of the user can be determined according to basic information and the historical consumption information about the user, and historical attention degrees of the user to the diagnosis products can be determined. Then, according to the historical interaction content between the user and the preset large language model, the historical demands of the user can be determined, and thus the historical interest labels of the user can be obtained through analysis according to the historical consumption information, historical attention degrees, and historical demands. Further, based on the basic information label, the historical consumption capability label, and the historical interest labels, product adaptation labels of the user under the *b* preset usage scenarios for each diagnosis products can be determined, to picture the user to obtain a historical user portrait. Based on this, the historical user portrait can be used to determine diagnosis products that the user is interested in and the adaptation degree of the user to each diagnosis product, thereby more accurately recommending the diagnosis products to the user, and improving the accuracy of product recommendation.

At 203, a recommendation rule is determined according to *c* preset user demands, the product data, and the historical user portrait.

In embodiments of the present disclosure, *c* is a positive integer, and the preset user demands are preset user demands corresponding to product data. The recommendation rule is used for representing a mapping relationship between preset user demands, product data, and the historical user portrait.

Exemplarily, the product data may include product function information and non-product function information, and each preset user demand may include a product function demand and a budget demand. The product function information is used to indicate a product function of the diagnosis product, and the non-product function information may include information such as a price of the product and an applicable vehicle model.

In some possible embodiments, the recommendation rule is determined according to the *c* preset user demands, the product data, and the historical user portrait as follows. A diagnosis product set corresponding to each preset user demand is determined according to the product function information and a product function demand corresponding to each preset user demand in the *c* preset user demands, to obtain *c* first diagnosis product sets. A price of each diagnosis product in the *c* first diagnosis product sets is determined according to the non-product function information. Diagnosis products in the *c* first diagnosis product sets are adjusted according to the price of each diagnosis product in the *c* first diagnosis product sets, the historical consumption capacity label, and a budget demand corresponding to each preset user demand, to obtain *c* second diagnosis product sets. Diagnosis products in the *c* second diagnosis product sets are adjusted according to the historical interest labels and the product adaptation labels, to obtain *c* target diagnosis product sets. A mapping relationship is determined among the *c* preset user demands, the historical consumption capability label, the historical interest labels, the product adaptation labels, and the *c* target diagnosis product sets, and the mapping relationship is determined as the recommendation rule.

Each first diagnosis product set includes at least one diagnosis product and each second diagnosis product set includes at least one diagnosis product. Each preset user demand corresponds to a target diagnosis product set, and each target diagnosis product set includes at least one diagnosis product. Diagnosis products in the *c* target diagnosis product sets include the *a* diagnosis products.

Specifically, the server first screens out, according to the product function information and the product function demand corresponding to each preset user demand in the *c* preset user demands, a diagnosis product set corresponding to each preset user demand from the *a* diagnosis products, to obtain *c* first diagnosis product sets. Diagnosis products in any two first diagnosis product sets may be the same. Then, the server obtains, from the non-product function information, the price of each diagnosis product in the *c* first diagnosis product sets. The server matches the price of each diagnosis product in the *c* first diagnosis product sets with the historical consumption capacity label, and adjusts the diagnosis products in the *c* first diagnosis product sets to obtain adjusted *c* first diagnosis product sets. The price of each diagnosis product in the adjusted *c* first diagnosis product sets is matched with a budget demand corresponding to the preset user demand, and diagnosis products in the adjusted *c* first diagnosis product sets are adjusted to obtain *c* second diagnosis product sets.

Further, the server screens the diagnosis products in the *c* second diagnosis product sets according to the historical demand labels, so that the diagnosis products in the second diagnosis product set match the historical demand labels to obtain adjusted *c* second diagnosis product sets. According to the product adaptation labels, an adaptation degree of each diagnosis product in the adjusted *c* second diagnosis product sets is determined, diagnosis products in the adjusted *c* second diagnosis product sets are screened according to the adaptation degree of each diagnosis product in the adjusted *c* second diagnosis product sets, so that the adaptation degree of each diagnosis product in the second diagnosis product set is greater than the preset adaptation degree, thereby obtaining *c* target diagnosis product sets. In this way, *c* preset user demands, the historical consumption capability label, the historical interest labels, the product adaptation labels, and the *c* target diagnosis product sets can be mapped with one another, and a mapping relationship as illustrated in FIG. 3 is established, in which the preset user demands, the historical consumption capability label, the historical interest labels, the product adaptation labels, and the target diagnosis product sets are mapped to one another. The mapping relationship between the *c* preset user demands, the historical consumption capability label, the historical interest labels, the product adaptation labels, and the *c* target diagnosis product sets is determined as the recommendation rule.

It can be seen that in embodiments of the present disclosure, the product function information can be matched with the product function demands corresponding to the preset user demands, so that *c* first diagnosis product sets are determined. The price of each diagnosis product in the *c* first diagnosis product sets is determined according to the non-product function information. The historical consumption capacity label of the user is matched with the budget demand corresponding to each preset user demand according to the price of each diagnosis product, to determine *c* second diagnosis product sets. Then the diagnosis products in the *c* second diagnosis product sets are screened according to the historical interest labels and the product adaptation labels, to obtain *c* target diagnosis product sets, so that a mapping relationship between preset user demands, a historical consumption capability label, historical interest labels, product adaptation labels, and target diagnosis product sets can be obtained. The mapping relationship is used as the recommendation rule. In this way, by determining a mapping relationship between a user demand, a historical user portrait, and product data, a diagnosis product matching the user demand can be recommended to the user more precisely, thereby improving the accuracy of product recommendation.

At 204, the *a* diagnosis products are classified according to the product data, the historical user portrait, and the recommendation rule, to obtain *a* classification label sets.

In embodiments of the present disclosure, each diagnosis product corresponds to a classification label set, and each classification label set includes at least one classification label. The server may classify and label the *a* diagnosis products according to the product data, the historical user portrait, and the mapping relationship between labels corresponding to the recommendation rule, to obtain *a* classification label sets.

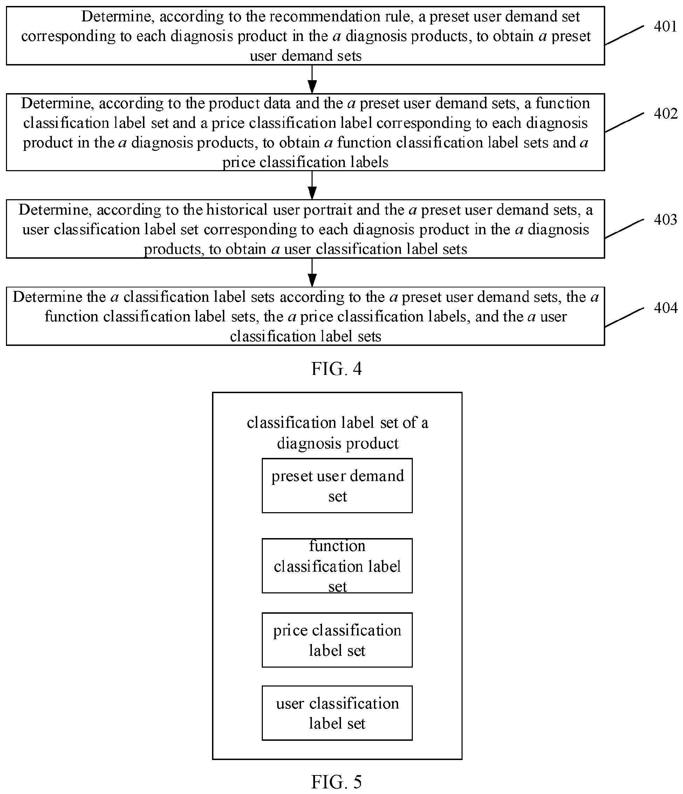

Exemplarily, as illustrated in FIG. 4, the *a* diagnosis products are classified according to the product data, historical user portrait, and the recommendation rule to obtain the *a* classification label sets as follows.

At 401, a preset user demand set corresponding to each diagnosis product in the *a* diagnosis products is determined according to the recommendation rule, to obtain *a* preset user demand sets.

At 402, a function classification label set and a price classification label corresponding to each diagnosis product in the *a* diagnosis products are determined according to the product data and the *a* preset user demand sets, to obtain *a* function classification label sets and *a* price classification labels.

At 403, a user classification label set corresponding to each diagnosis product in the *a* diagnosis products is determined according to the historical user portrait and the *a* preset user demand sets, to obtain *a* user classification label sets.

At 404, the *a* classification label sets are determined according to the *a* preset user demand sets, the *a* function classification label sets, the *a* price classification labels, and the *a* user classification label sets.

In embodiments of the present disclosure, each preset user demand set includes at least one preset user demand, and each function classification label set includes at least one function classification label. Each user classification label set includes at least one user classification label.

Specifically, the server firstly matches diagnosis products in the target diagnosis product sets with the preset user demands correspondingly, according to the mapping relationship between preset user demands and target diagnosis product sets in the recommendation rule. It can be understood that, *c* preset user demands include combinations of all product function demands and budget demands corresponding to the *a* diagnosis products, Therefore, each of the *a* diagnosis products can match at least one preset user demand. Thus, *a* preset user demand sets corresponding to the *a* diagnosis products can be obtained.

Then, the server can search, according to a preset user demand set corresponding to each diagnosis product in the *a* diagnosis products, the product data for a product function corresponding to the product function demand of each preset user demand in the preset user demand set. The server determines, according to the product function, a function classification label set corresponding to each diagnosis product in the *a* diagnosis products, to obtain *a* function classification label sets. The server searches, according to the preset user demand set corresponding to each diagnosis product in the *a* diagnosis products, the product data for a product price corresponding to each budget demand in the preset user demand set, and determines, according to the product price, a price classification label corresponding to each diagnosis product in the *a* diagnosis products, to obtain the *a* price classification labels.

Further, the server determines a user classification label set corresponding to each diagnosis product in the *a* diagnosis products according to the historical user portrait and the *a* preset user demand set. In specific implementation, the server matches preset user demands in a preset user demand set corresponding to each of the *a* diagnosis products with the basic information label, the historical consumption capability labels, the historical interest labels, and the product adaptation labels corresponding to the historical user portrait, and takes all of the basic information label, the historical consumption capability labels, the historical interest labels, and product adaptation labels corresponding to each diagnosis product as a user classification label corresponding to each diagnosis product, to obtain a user classification label set corresponding to each diagnosis product, thereby obtaining *a* user classification label sets.

Finally, the server may use the preset user demand set, the function classification label set, the price classification label set, and the user classification label set of each diagnosis product together as a classification label set of the diagnosis product, obtaining a classification label set as illustrated in FIG. 5. There is only one price classification label in a classification label set of a diagnosis product, at least one preset user demand in a preset user demand set, at least one function classification label in a function classification label set, and at least one user classification label in a user classification label set. Optionally, the classification label set may also include only part of the above labels.

It can be seen that, according to the recommendation rule, each diagnosis product can be matched with preset user demands, to obtain a preset user demand set corresponding to each diagnosis product, and then, a function classification label set and a price classification label corresponding to each diagnosis product are obtained, according to the product data and each preset user demand set. A user classification label set corresponding to each diagnosis product is obtained according to the historical user portrait and each preset user demand set, to obtain a classification label set corresponding to each diagnosis product. Thus, diagnosis products can be precisely classified from aspects such as function demands, price demands, the consumption capability of the user, interests of the user, and product adaptation degrees, to precisely match actual demands of a user, and accurately recommend diagnosis products to the user, thereby improving the accuracy of product recommendation.

In some possible embodiments, according to the product data, the historical user portrait, and the recommendation rule, the *a* diagnosis products are classified to obtain the *a* classification label sets, which may be implemented through a preset large language model, such as a GPT model or a BERT model. The preset large language model may output *a* classification label sets corresponding to *a* diagnosis products by performing feature extraction on product data, a historical user portrait, and a recommendation rule, splitting extracted features into minimum units, and classifying the split minimum units with a classifier. Based on this, a preset large language model can be pre-trained, so that the preset large language model can accurately classify each diagnosis product, so that a classification label set can accurately match the actual demands of a user, and a diagnosis product can be accurately recommended to the user, thereby improving the accuracy of product recommendation.

At 205, interaction content between a user and a preset large language model is obtained

In embodiments of the present disclosure, the user may interact with the preset large language model on the interaction device, and the interaction manner may include a text, a voice, a sign language action, and the like. The reply content output by the preset large language model may guide the user to input the actual demand of the user, the historical use product, the product of interest, and the like. The server may obtain the interaction content.

At 206, user preference information is determined according to the interaction content.

In embodiments of the present disclosure, the user preference information may include actual demands of the user, historical use products of the user, products of interest, etc. The server may perform semantic recognition on the interaction content with the preset large language model, to determine semantic information corresponding to the interaction content, and determine the user preference information according to the semantic information.

At 207, a target classification label set is determined from the *a* classification label sets according to the user preference information,.

In embodiments of the present disclosure, the server may match the user preference information with classification labels corresponding to each diagnosis product, to determine a target classification label set with the highest matching degree with the user preference information.

Exemplarily, the user preference information may include a target product function demand and a target budget demand, a historical use product, and a product of interest. The target product function demand is used for representing an actual demand of a user for a product function, and the target budget demand is used for representing an actual budget of the user for a product price.

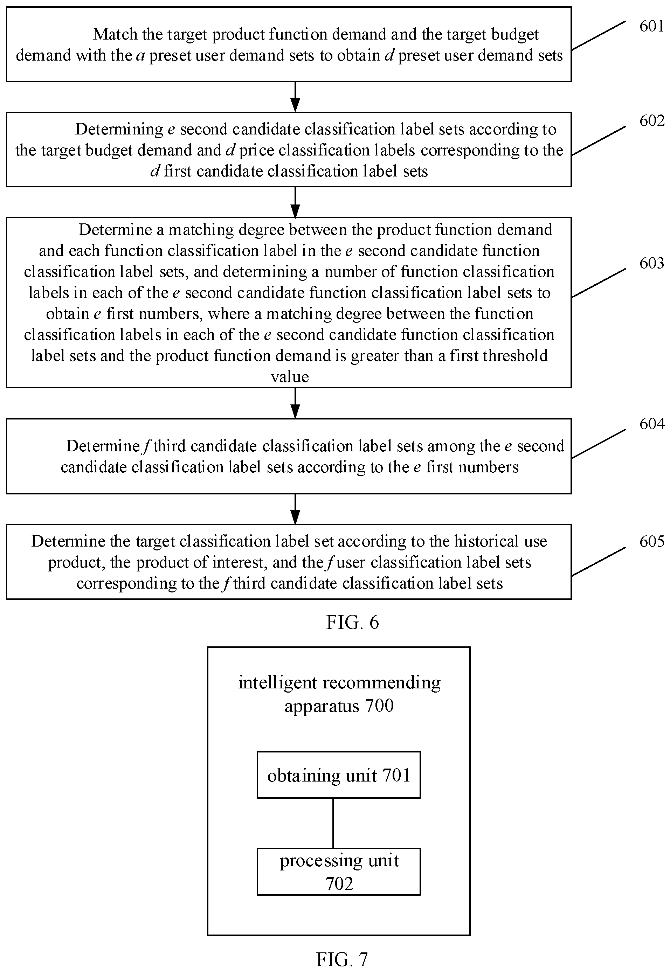

In some possible embodiments, as illustrated in FIG. 6, the target classification label set is determined from the *a* classification label sets according to the user preference information may as follows.

At 601, the target product function demand and the target budget demand are matched with the *a* preset user demand sets to obtain *d* preset user demand sets.

At 602, e second candidate classification label sets are determined according to the target budget demand and *d* price classification labels corresponding to the *d* first candidate classification label set.

At 603, a matching degree between the product function demand and each function classification label in the e second candidate function classification label sets is determined, and a number of function classification labels in each of the e second candidate function classification label sets is determined to obtain e first numbers, where a matching degree between the function classification labels in each of the e second candidate function classification label sets and the product function demand is greater than a first threshold value.

At 604, *f* third candidate classification label sets are determined among the e second candidate classification label sets according to the e first numbers.

At 605, the target classification label set is determined according to the historical use product, the product of interest, and the *f* user classification label sets corresponding to the *f* third candidate classification label sets.

The *d* preset user demand sets correspond to *d* first candidate classification label sets in a one-to-one correspondence, and *d* is a positive integer less than or equal to a. *e* is a positive integer less than or equal to d, and the e second candidate function classification label sets correspond to the *e* second candidate classification label sets in a one-to-one correspondence, and each second candidate function classification label set corresponds to a first number. *f* is a positive integer less than or equal to e.

Specifically, the server first searches for a target user demand corresponding to the target product function demand and the target budget demand from *a* preset user demand sets corresponding to the *a* diagnosis products, thereby screening out a preset user demand set including the target user demand, and obtaining *d* preset user demand sets. A classification label set corresponding to each preset user demand set in the *d* preset user demand sets is obtained, to obtain *d* first candidate classification label sets. Then, the server searches for a price classification label corresponding to the target budget demand from *d* price classification labels corresponding to *d* first candidate classification label sets, to obtain *e* price classification labels, and obtains *e* second candidate classification label sets corresponding to the *e* price classification labels. Each price classification label corresponds to one second candidate classification label set.

Further, the server determines the matching degree between the product function demand and each function classification label in the *e* second candidate function classification label sets. The server determines function classification labels in each second candidate function classification label set with matching degrees between the function classification labels and the product function demands greater than a first threshold value, counts the number of function classification labels in each second candidate function classification label set with matching degrees between the function classification labels and the product function demands greater than a first threshold value, to obtain *e* first numbers. It can be understood that, the larger the first number is, the higher the matching degree between the product function demand of the user and the function classification label is. The server takes a classification label set in the *e* second candidate function classification label sets, with a corresponding first number being greater than a first preset number, as a third candidate classification label set, to obtain *f* third candidate classification label sets.

Finally, the server may obtain the classification label set corresponding to the historical use product of the user and the classification label set corresponding to the product of interest, match a user classification label corresponding to the classification label set corresponding to the historical use product and the classification label set corresponding to the product of interest with user classification labels in *f* user classification label sets corresponding to *f* third candidate classification label sets. The server determines the number of labels matching all labels in the classification label set corresponding to the historical use product and the classification label set corresponding to the product of interest in each third candidate classification label set, to obtain *f* second numbers. The server takes a third candidate classification label set with the maximum second number as the target classification label set.

Optionally, there may be multiple target classification label sets, and the server may take multiple third candidate classification label sets, with corresponding second numbers being greater than the second preset number, as the multiple target classification label sets. The server ranks the multiple target classification label sets according to the second numbers, and sequentially recommending to the user multiple target diagnosis products corresponding to the multiple target classification label sets according to a ranking result.

It can be seen that, according to the target product function demand, the target budget demand, the historical use product, and the product of interest of the user, a target classification label set satisfying user preference information can be sequentially screened from the *a* classification label set, so that an actual demand and a product of interest of the user are accurately matched, and a diagnosis product is accurately recommended to the user, thereby improving the accuracy of product recommendation.

Optionally, each user classification label set may include the historical interest labels.

In some possible embodiments, the target classification label set is determined according to the historical use product, the product of interest, and the *f* user classification label sets corresponding to the *f* third candidate classification label sets as follows.

The historical used product and the product of interest are classified to obtain an interest label.

A matching degree between the interest label and each historical interest label in *f* historical interest labels corresponding to the *f* user classification label sets is determined, and a classification label set is determined among the *f* third candidate classification label sets, with a matching degree between a historical interest label corresponding to the classification label sets and the interest label greater than a third threshold as the target classification label set.

The interest labels include all labels corresponding to the historical use product and the product of interest.

Specifically, the server may classify the historical used product and the product of interest according to all labels corresponding to the historical used product and the product of interest to obtain the interest label. Then, the server determines the matching degree between each historical interest label in the *f* historical interest labels corresponding to the *f* user classification label sets and the interest label, where the matching between any two interest labels can be preset. In this way, according to a matching degree between each historical interest label in *f* historical interest labels corresponding to *f* user classification label sets and an interest label, a third candidate classification label set, with a matching degree between a historical interest label corresponding to the classification label sets and the interest label greater than a third threshold, may be determined as a target classification label set. Optionally, the server may also use a third candidate classification label set that has the highest matching degree with the interest label as the target classification label set.

It can be seen that by classifying the historical used product and product of interest, the interest label can be obtained. By determining the matching degree between the interest label and each historical interest label in *f* historical interest labels corresponding to *f* user classification label sets, a classification label set in *f* third candidate classification label sets, with a matching degree between a historical interest label corresponding to the classification label sets and the interest label greater than a third threshold value, can be determined as a target classification label set. In this way, the historical use product and the product of interest of a user can be associated with a target classification label set, so that a diagnosis product of interest is recommended to the user, thereby improving the accuracy of product recommendation.

At 208, related recommended content of a target diagnosis product corresponding to the target classification label set is output to the user through the preset large language model.

In embodiments of the present disclosure, the related recommended content of the target diagnosis product is the related recommended content corresponding to the target diagnosis product which is output by the preset large language model according to the product data and the of the user, and the related recommended content can be displayed on the interaction device in the form of text, voice, picture, video, etc.

Exemplarily, the related recommended content of the target diagnosis product corresponding to the target classification label set is output to the user through the preset large language model.

Target product function information and target non-product function information corresponding to the target diagnosis product are determined in the product data.

Content of interest of the user is determined according to the target classification label set and the historical interest label.

The related recommended content corresponding to the target classification label set, the target product function information, the target non-product function information, and the content of interest is output to the user through the preset large language model.

In specific implementation, the server firstly obtains the target product function information and the target non-product function information corresponding to the target diagnosis product from the product data. The target product function information is used for representing a product function corresponding to the target diagnosis product, for example, reading a fault code, reading a data stream, etc. The target non-product function information may include information such as price, performance, and applicable vehicle model corresponding to the target diagnosis product.

Then, the server determines the interest labels of the user according to the target classification label set, and determines the content of interest of the user according to the interest labels of the user and the historical interest labels. The content of interest may include a diagnosis product which the user is interested in, a product function which the user is interested in, a product price which the user is interested in, a product recommendation form which the user is interested in, etc., and the product recommendation form may include a text, a picture, a video, a voice, etc.

Finally, the target classification label set, the target product function information, the target non-product function information, and the content of interest are input into the preset large language model, and the related recommended content corresponding to the target diagnosis product is output through the preset large language model.

Thus, the product data and the content of interest of the user can be comprehensively considered, and the relevant recommended content corresponding to the target diagnosis product are recommended to the user, so that on the basis of satisfying the interests of the user, an interested diagnosis product is recommended to the user, thereby improving the accuracy of product recommendation.

In conclusion, in embodiments of the present disclosure, historical user data and product data corresponding to *a* diagnosis products are firstly obtained. A historical user portrait is constructed according to *b* preset usage scenarios and the historical user data. A recommendation rule is determined according to *c* preset user demands, the product data, and the historical user portrait. Further, the *a* diagnosis products are classified according to the product data, the historical user portrait, and the recommendation rule, to obtain a classification label set corresponding to each diagnosis product in the *a* diagnosis products. Interaction content between a user and a preset large language model is obtained. User preference information is determined according to the interaction content. A target classification label set is determined from *a* classification label sets according to the user preference information. Related recommended content of a target diagnosis product corresponding to the target classification label set is output to the user through the preset large language model. In this way, the usage scenario and the user data can be taken into consideration, and a diagnosis product satisfying a specific usage scenario is recommended to the user. Furthermore, the product data, the user portrait, and the user demand can be intergraded to determine a recommendation rule meeting different demands of a user. The diagnosis products can also be classified by integrating the product data, the historical user portrait, and the recommendation rule, and a classification label satisfying the user preference information is selected from classification labels according to the interaction content between the user and the large model, so that relevant recommended content corresponding to the target diagnosis product is output and recommended to the user. In this way, all factors satisfying user demands are considered comprehensively, and product content is accurately recommended to a user, thereby improving the accuracy of product recommendation.

Reference is made to FIG. 7, which is a block diagram of functional units of an intelligent recommending apparatus according to an embodiment of the present disclosure. The intelligent recommending apparatus 700 may include the server in any of the above embodiments. Optionally, the intelligent recommending apparatus 700 may include a VCI of a vehicle diagnostic device. The intelligent recommending apparatus 700 include an obtaining unit 701 and a processing unit 702.

The obtaining unit 701 is configured to obtain historical user data and product data corresponding to *a* diagnosis products, a being a positive integer.

The processing unit 702 is configured to construct a historical user portrait according to *b* preset usage scenarios and the historical user data, *b* being a positive integer; determine a recommendation rule according to *c* preset user demands, the product data, and the historical user portrait; *c* being a positive integer; and classify the *a* diagnosis products according to the product data, the historical user portrait, and the recommendation rule, to obtain *a* classification label sets; each diagnosis product corresponding to one classification label set, and each classification label set including at least one classification label.

The obtaining unit 701 is configured to obtain interaction content between a user and a preset large language model.

The processing unit 702 is configured to determine user preference information according to the interaction content; determine, according to the user preference information, a target classification label set from the *a* classification label sets; and output, through the preset large language model, related recommended content of a target diagnosis product corresponding to the target classification label set to the user.

In a possible embodiment, the historical user data includes basic information, historical behavior information, and historical interaction content. In terms of constructing the historical user portrait according to the *b* preset usage scenarios and the historical user data, the processing unit 702 is specifically configured to: determine a basic information label of the user according to the basic information; determine historical consumption information of the user for the *a* diagnosis products according to the historical behavior information; determine a historical consumption capability label of the user according to the basic information and the historical consumption information; determine, according to the historical behavior information, historical attention degrees of the user to the *a* diagnosis products; determine historical demands of the user by performing semantic recognition on the historical interaction content; determine historical interest labels of the user according to the historical consumption information, the historical attention degrees, and the historical demands; determine product adaptation labels of the user under the *b* preset usage scenarios according to the basic information label, the historical consumption capability label, and the historical interest labels; and determine the historical user portrait according to the basic information label, the historical consumption capability label, the historical interest labels, and the product adaptation labels.

In a possible embodiment, the product data includes product function information and non-product function information; each preset user demand includes a product function demand and a budget demand. In terms of determining the recommendation rule according to the *c* preset user demands, the product data, and the historical user portrait, the processing unit 702 is specifically configured to: determine, according to the product function information and a product function demand corresponding to each preset user demand in the *c* preset user demands, a diagnosis product set corresponding to each preset user demand, to obtain *c* first diagnosis product sets; each first diagnosis product set including at least one diagnosis product; determine, according to the non-product function information, a price of each diagnosis product in the *c* first diagnosis product sets; adjust diagnosis products in the *c* first diagnosis product sets according to the price of each diagnosis product in the *c* first diagnosis product sets, the historical consumption capacity label, and a budget demand corresponding to each preset user demand, to obtain *c* second diagnosis product sets; each second diagnosis product set including at least one diagnosis product; adjust, according to the historical interest labels and the product adaptation labels, diagnosis products in the *c* second diagnosis product sets to obtain *c* target diagnosis product sets; each preset user demand corresponding to a target diagnosis product set, and each target diagnosis product set including at least one diagnosis product; diagnosis products in the c target diagnosis product sets including the *a* diagnosis products; and determine a mapping relationship between the c preset user demands, the historical consumption capability label, the historical interest labels, the product adaptation labels, and the c target diagnosis product sets, and determine the mapping relationship as the recommendation rule.

In a possible embodiment, in terms of classifying the *a* diagnosis products according to the product data, the historical user portrait, and the recommendation rule, to obtain the *a* classification label sets, the processing unit 702 is specifically configured to: determine, according to the recommendation rule, a preset user demand set corresponding to each diagnosis product in the *a* diagnosis products, to obtain *a* preset user demand sets; each preset user demand set including at least one preset user demand; determine, according to the product data and the *a* preset user demand sets, a function classification label set and a price classification label corresponding to each diagnosis product in the *a* diagnosis products, to obtain *a* function classification label sets and *a* price classification labels; each function classification label set including at least one function classification label; determine, according to the historical user portrait and the *a* preset user demand sets, a user classification label set corresponding to each diagnosis product in the *a* diagnosis products, to obtain *a* user classification label sets; each user classification label set including at least one user classification label; and determine the *a* classification label sets according to the *a* preset user demand sets, the *a* function classification label sets, the *a* price classification labels, and the *a* user classification label sets.

In a possible embodiment, in terms of the user preference information includes: a target product function demand and a target budget demand, a historical use product, and a product of interest; and determining, according to the user preference information, the target classification label set from the *a* classification label sets, the processing unit 702 is specifically configured to: match the target product function demand and the target budget demand with the *a* preset user demand sets to obtain *d* preset user demand sets; the *d* preset user demand sets corresponding to *d* first candidate classification label sets in a one-to-one correspondence, *d* being a positive integer less than or equal to *a*; determine *e* second candidate classification label sets according to the target budget demand and *d* price classification labels corresponding to the *d* first candidate classification label sets; *e* being a positive integer less than or equal to d; determine a matching degree between the product function demand and each function classification label in the *e* second candidate function classification label sets, and determine a number of function classification labels in each of the *e* second candidate function classification label sets to obtain *e* first numbers, where a matching degree between the function classification labels in each of the *e* second candidate function classification label sets and the product function demand is greater than a first threshold value; the *e* second candidate function classification label sets correspond to the *e* second candidate classification label sets in a one-to-one correspondence; and each second candidate function classification label set corresponds to a first number; determine *f* third candidate classification label sets among the *e* second candidate classification label sets according to the *e* first numbers; *f* being a positive integer less than or equal to e; and determine the target classification label set according to the historical use product, the product of interest, and the *f* user classification label sets corresponding to the *f* third candidate classification label sets.

In a possible embodiment, each user classification label set includes the historical interest labels. In terms of determining the target classification label set according to the historical use product, the product of interest, and the *f* user classification label sets corresponding to the *f* third candidate classification label sets, the processing unit 702 is specifically configured to: classify the historical used product and the product of interest to obtain an interest label, where the interest label includes all labels corresponding to the historical used product and the product of interest; and determine a matching degree between the interest label and each historical interest label in *f* historical interest labels corresponding to the *f* user classification label sets, and determine, among the *f* third candidate classification label sets, a classification label set with a matching degree between a historical interest label corresponding to the classification label sets and the interest label greater than a third threshold, as the target classification label set.

In a possible embodiment, in terms of outputting, through the preset large language model, the related recommended content of the target diagnosis product corresponding to the target classification label set to the user, the processing unit 702 is specifically configured to: determine target product function information and target non-product function information corresponding to the target diagnosis product in the product data; determine, according to the target classification label set and the historical interest label, content of interest of the user; and output, through the preset large language model, the related recommended content corresponding to the target classification label set, the target product function information, the target non-product function information, and the content of interest to the user.

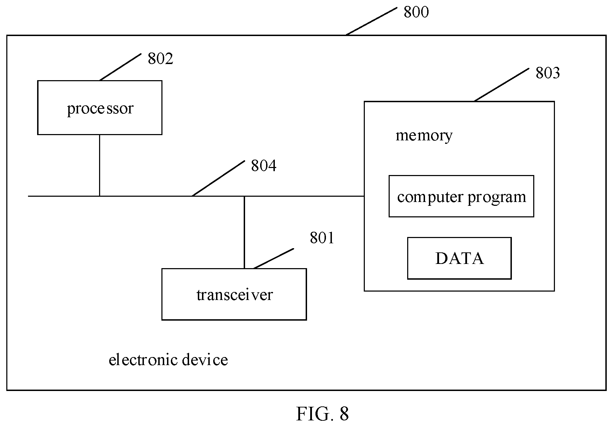

Reference is made to FIG. 8, which is a schematic structural diagram of an electronic device according to an embodiment of the present disclosure. As illustrated in FIG. 8, the electronic device includes a transceiver 801, a processor 802, and a memory 803. The transceiver 801, the processor 802, and the memory 803 are connected via a bus 804. The memory 803 is configured to store computer programs and data stored in the memory 803 can be transmitted to the processor 802. The electronic device 800 includes the intelligent recommending apparatus 700. The electronic device 800 may be the server in any one of the above embodiments. The electronic device 800 may further include a VCI of a vehicle diagnostic device. The processor 802 is used to store computer programs stored in the memory 803 to execute the following.

Historical user data and product data corresponding to *a* diagnosis products are obtained, a being a positive integer. A historical user portrait is constructed according to *b* preset usage scenarios and the historical user data, *b* being a positive integer. A recommendation rule is determined according to *c* preset user demands, the product data, and the historical user portrait; *c* being a positive integer. The *a* diagnosis products are classified according to the product data, the historical user portrait, and the recommendation rule, to obtain *a* classification label sets; each diagnosis product corresponding to one classification label set, and each classification label set including at least one classification label. Interaction content between a user and a preset large language model is obtained. User preference information is determined according to the interaction content. A target classification label set is determined from the *a* classification label sets according to the user preference information. Related recommended content of a target diagnosis product corresponding to the target classification label set is output to the user through the preset large language model.

The foregoing solution of the embodiments of the disclosure is mainly described from the viewpoint of execution process of the method. It can be understood that, in order to implement the above functions, the electronic device includes hardware structures and/or software modules corresponding to the respective functions. Those skilled in the art should readily recognize that, in combination with the example units and scheme steps described in the embodiments disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation should not be considered as beyond the scope of the present disclosure.

A computer-readable storage medium is further provided in embodiments of the present disclosure. The computer-readable storage medium stores a computer program, and the computer program is configured to be executed by a processor to execute part or all of operations of any method described in the above method embodiments.

A computer program product is further provided in embodiments of the present disclosure. The computer program product includes a non-transitory computer-reader storage medium storing a computer program. The computer program is operable to enable a computer to execute part of or all of operations of any method described in the above method embodiments.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments.

It will be appreciated that the systems, apparatuses, and methods disclosed in embodiments herein may also be implemented in various other manners. For example, the above apparatus embodiments are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

In addition, various functional units described in embodiments herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, a server, a network device, etc., or a processor to execute some or all operations of the methods described in various embodiments. The above storage medium may include various kinds of media that can store program codes, such as a universal serial bus (USB) flash disk, a mobile hard drive, a read-only memory (ROM), a random access memory (RAM), a magnetic disk, or an optical disk.

It will be understood by those of ordinary skill in the art that all or a part of the various methods of the embodiments described above may be accomplished by means of a program to instruct associated hardware, and the program may be stored in a computer-readable memory, which may include a flash disk, an ROM, an RAM, a magnetic disk, or an optical disk.

The above embodiments in the disclosure are described in detail. Principles and implementation manners of the disclosure are elaborated with specific embodiments herein. The illustration of embodiments above is only used to help understanding of methods and core ideas of the disclosure. At the same time, for those of ordinary skill in the art, according to ideas of the present disclosure, there will be changes in the specific implementation manners and application scopes. In summary, contents of this specification should not be understood as limitation on the present disclosure.

## Claims

1. An intelligent recommendation method, comprising:
obtaining historical user data and product data corresponding to *a* diagnosis products, a being a positive integer;
constructing a historical user portrait according to *b* preset usage scenarios and the historical user data, *b* being a positive integer;
determining a recommendation rule according to *c* preset user demands, the product data, and the historical user portrait; *c* being a positive integer;
classifying the *a* diagnosis products according to the product data, the historical user portrait, and the recommendation rule, to obtain *a* classification label sets; each diagnosis product corresponding to one classification label set, and each classification label set comprising at least one classification label;
obtaining interaction content between a user and a preset large language model;
determining user preference information according to the interaction content;
determining, according to the user preference information, a target classification label set from the *a* classification label sets; and
outputting, through the preset large language model, related recommended content of a target diagnosis product corresponding to the target classification label set to the user.

2. The method of claim 1, wherein the historical user data comprises basic information, historical behavior information, and historical interaction content; and constructing the historical user portrait according to the *b* preset usage scenarios and the historical user data comprises:
determining a basic information label of the user according to the basic information;
determining historical consumption information of the user for the *a* diagnosis products according to the historical behavior information;
determining a historical consumption capability label of the user according to the basic information and the historical consumption information;
determining, according to the historical behavior information, historical attention degrees of the user to the *a* diagnosis products;
determining historical demands of the user by performing semantic recognition on the historical interaction content;
determining historical interest labels of the user according to the historical consumption information, the historical attention degrees, and the historical demands;
determining product adaptation labels of the user under the *b* preset usage scenarios according to the basic information label, the historical consumption capability label, and the historical interest labels; and
determining the historical user portrait according to the basic information label, the historical consumption capability label, the historical interest labels, and the product adaptation labels.

3. The method of claim 2, wherein the product data comprises product function information and non-product function information; each preset user demand comprises a product function demand and a budget demand; and determining the recommendation rule according to the *c* preset user demands, the product data, and the historical user portrait comprises:
determining, according to the product function information and a product function demand corresponding to each preset user demand in the *c* preset user demands, a diagnosis product set corresponding to each preset user demand, to obtain *c* first diagnosis product sets; each first diagnosis product set comprising at least one diagnosis product;
determining, according to the non-product function information, a price of each diagnosis product in the *c* first diagnosis product sets;
adjusting diagnosis products in the *c* first diagnosis product sets according to the price of each diagnosis product in the *c* first diagnosis product sets, the historical consumption capacity label, and a budget demand corresponding to each preset user demand, to obtain *c* second diagnosis product sets; each second diagnosis product set comprising at least one diagnosis product;
adjusting, according to the historical interest labels and the product adaptation labels, diagnosis products in the *c* second diagnosis product sets to obtain *c* target diagnosis product sets; each preset user demand corresponding to a target diagnosis product set, and each target diagnosis product set comprising at least one diagnosis product; diagnosis products in the *c* target diagnosis product sets comprising the *a* diagnosis products; and
determining a mapping relationship between the *c* preset user demands, the historical consumption capability label, the historical interest labels, the product adaptation labels, and the *c* target diagnosis product sets, and determining the mapping relationship as the recommendation rule.

4. The method of claim 3, wherein classifying the *a* diagnosis products according to the product data, the historical user portrait, and the recommendation rule, to obtain the *a* classification label sets comprises:
determining, according to the recommendation rule, a preset user demand set corresponding to each diagnosis product in the *a* diagnosis products, to obtain *a* preset user demand sets; each preset user demand set comprising at least one preset user demand;
determining, according to the product data and the *a* preset user demand sets, a function classification label set and a price classification label corresponding to each diagnosis product in the *a* diagnosis products, to obtain *a* function classification label sets and *a* price classification labels; each function classification label set comprising at least one function classification label;
determining, according to the historical user portrait and the *a* preset user demand sets, a user classification label set corresponding to each diagnosis product in the *a* diagnosis products, to obtain *a* user classification label sets; each user classification label set comprising at least one user classification label; and
determining the *a* classification label sets according to the *a* preset user demand sets, the *a* function classification label sets, the *a* price classification labels, and the *a* user classification label sets.

5. The method of claim 4, wherein the user preference information comprises: a target product function demand and a target budget demand, a historical use product, and a product of interest; and determining, according to the user preference information, the target classification label set from the *a* classification label sets comprises:
matching the target product function demand and the target budget demand with the *a* preset user demand sets to obtain *d* preset user demand sets; the *d* preset user demand sets corresponding to *d* first candidate classification label sets in a one-to-one correspondence, *d* being a positive integer less than or equal to *a;*
determining *e* second candidate classification label sets according to the target budget demand and *d* price classification labels corresponding to the *d* first candidate classification label sets; *e* being a positive integer less than or equal to d;
determining a matching degree between the product function demand and each function classification label in the *e* second candidate function classification label sets, and determining a number of function classification labels in each of the *e* second candidate function classification label sets to obtain *e* first numbers, wherein a matching degree between the function classification labels in each of the *e* second candidate function classification label sets and the product function demand is greater than a first threshold value; the e second candidate function classification label sets correspond to the *e* second candidate classification label sets in a one-to-one correspondence; and each second candidate function classification label set corresponds to a first number;
determining *f* third candidate classification label sets among the *e* second candidate classification label sets according to the *e* first numbers; *f* being a positive integer less than or equal to e; and
determining the target classification label set according to the historical use product, the product of interest, and the *f* user classification label sets corresponding to the *f* third candidate classification label sets.

6. The method of claim 5, wherein each user classification label set comprises the historical interest labels; and determining the target classification label set according to the historical use product, the product of interest, and the *f* user classification label sets corresponding to the *f* third candidate classification label sets comprises:
classifying the historical used product and the product of interest to obtain an interest labels, wherein the interest label comprises all labels corresponding to the historical used product and the product of interest; and
determining a matching degree between the interest label and each historical interest label in *f* historical interest labels corresponding to the *f* user classification label sets, and determining, among the *f* third candidate classification label sets, a classification label set with a matching degree between a historical interest label corresponding to the classification label sets and the interest label greater than a third threshold, as the target classification label set.

7. The method of claim 6, wherein outputting, through the preset large language model, the related recommended content of the target diagnosis product corresponding to the target classification label set to the user comprises:
determining target product function information and target non-product function information corresponding to the target diagnosis product in the product data;
determining, according to the target classification label set and the historical interest label, content of interest of the user; and
outputting, through the preset large language model, the related recommended content corresponding to the target classification label set, the target product function information, the target non-product function information, and the content of interest to the user.

8. An intelligent recommendation apparatus, comprising:
an obtaining unit configured to obtain historical user data and product data corresponding to *a* diagnosis products, a being a positive integer;
a processing unit configured to construct a historical user portrait according to *b* preset usage scenarios and the historical user data, *b* being a positive integer; determine a recommendation rule according to *c* preset user demands, the product data, and the historical user portrait; *c* being a positive integer; and classify the *a* diagnosis products according to the product data, the historical user portrait, and the recommendation rule, to obtain *a* classification label sets; each diagnosis product corresponding to one classification label set, and each classification label set comprising at least one classification label;
the obtaining unit being configured to obtain interaction content between a user and a preset large language model;
the processing unit being configured to determine user preference information according to the interaction content; determine, according to the user preference information, a target classification label set from the *a* classification label sets; and output, through the preset large language model, related recommended content of a target diagnosis product corresponding to the target classification label set to the user.

9. An electronic device, comprising: a processor and a memory, the processor being connected to the memory, the memory being configured to store computer programs, and the processor being configured to execute the computer programs stored in the memory to cause the electronic device to execute the method of any one of claims 1 to 7.

10. A computer-readable storage medium, storing a computer program, wherein the computer program is configured to be executed by a processor to execute the method of any one of claims 1 to 7.
